# EUROPÄISCHE PATENTSCHRIFT

(11) **EP 4 136 013 B1**
(45) Veröffentlichungstag und Bekanntmachung des Hinweises auf die Patenterteilung: **03.09.2025**
(21) Anmeldenummer: 21716285.8
(22) Anmeldetag: 25.03.2021
(51) Int. Cl.: B62D 53/00, B65G 65/00, B60L 53/14, B60L 53/36, H01R 41/00

(54) **SYSTEM UMFASSEND EINEN ROUTENZUG UND MINDESTENS EINE STATIONÄRE ÜBERNAHMESTATION**
SYSTEM COMPRISING A TUGGER TRAIN AND AT LEAST ONE STATIONARY TRANSFER STATION
SYSTÈME COMPRENANT UN CHARIOT TRACTEUR ET AU MOINS UN POSTE DE TRANSFERT FIXE

(30) Priorität: 15.04.2020 DE 102020110257
(43) Veröffentlichungstag der Anmeldung: 22.02.2023
(73) Patentinhaber: LR Intralogistik GmbH, 84109 Wörth a. d. Isar (DE)
(72) Erfinder: KOLLMANNSBERGER, Josef, 84106 Vokenschwand (DE)
(74) Vertreter: Patentship Patentanwaltgesellschaft
(86) Internationale Anmeldenummer: PCT/EP2021/057734
(87) Internationale Veröffentlichungsnummer: WO 2021/209240

(56) Entgegenhaltungen:
- EP-A2- 1 637 477
- WO-A1-2019/063201
- US-A- 4 944 357
- US-A- 5 664 929
- US-B1- 6 524 057

## Beschreibung

Die Erfindung betrifft ein System umfassend einen Routenzug, der ein Zugfahrzeug und mindestens einen Routenzuganhänger aufweist, und mindestes eine stationäre Übernahmestation zur Übergabe von Lasten zwischen dem Routenzuganhänger und der stationären Übernahmestation, wobei sich der Routenzuganhänger zur Lastübergabe in einer Umschlagposition relativ zur stationären Übernahmestation befindet, wobei eine elektrische Energieversorgung der stationären Übernahmestation von dem Routenzuganhänger erfolgt und der Routenzuganhänger zur Energieversorgung der stationären Übernahmestation mit elektrischen Kontakten versehen ist, die in der Umschlagposition mit Gegenkontakten der stationären Übernahmestation kontaktierbar sind, wobei der Routenzuganhänger zwei in Fahrzeuglängsrichtung voneinander beabstandet angeordnete elektrische Kontakte aufweist.

Für den werksinternen Transport von Lasten, beispielsweise Paletten oder Gitterboxen zur Aufnahme von Ladungen, werden in zunehmendem Umfang Routenzüge eingesetzt, deren Routenzuganhänger von einem Zugfahrzeug zu den gewünschten Übernahmestationen verfahren werden.

An den gewünschten Übernahmestation muss sich der Routenzuganhänger in Fahrzeuglängsrichtung und in Fahrzeugquerrichtung in einer definierten Umschlagposition relativ zur stationären Übernahmestation befinden, um eine Last zwischen dem Routenzuganhänger und der stationären Übernahmestation exakt übergeben zu können, d.h. von dem Routenzuganhänger auf die stationäre Übernahmestation zu übergeben oder von stationären Übernahmestation auf den Routenzuganhänger zu übergeben. Hierzu sind bereits Systeme bekannt, bei denen eine elektrische Energieversorgung und somit eine Stromversorgung der stationären Übernahmestation von dem Routenzug aus erfolgt, um beispielswiese eine elektrisch betriebene Fördereinrichtung der Übernahmestation mit elektrischer Energie aus dem Routenzug zu versorgen, um einen Stromanschluss der Übernahmestation an ein gebäudeseitiges Stromnetz zu vermeiden. Der Routenzuganhänger ist zur Energieversorgung der stationären Übernahmestation mit elektrischen Kontakten versehen, die in der Umschlagposition mit Gegenkontakten der stationären Übernahmestation kontaktierbar sind. Die richtige Positionierung des Routenzuganhängers in Fahrzeuglängsrichtung und in Fahrzeugquerrichtung in der definierten Umschlagposition an der Übernahmestation ist hierbei ebenfalls für eine sichere Kontaktierung der Kontakte des Routenzuganhängers mit den Gegenkontakten der stationären Übernahmestation wichtig.

Um den Routenzug mit dem entsprechenden Routenzuganhänger an einer stationären Übernahmestation in Fahrzeugquerrichtung richtig zu positionieren, ist es bekannt, entsprechende Positionserkennungssysteme und Positioniersysteme zu verwenden. Hierzu ist es bekannt, Abstandmesssensoren an dem Routenzuganhänger vorzusehen, mit denen der seitliche Abstand des Routenzuganhängers zur stationären Übernahmestation in der Umschlagposition gemessen und dementsprechend der Routenzuganhänger in Fahrzeugquerrichtung an der stationären Umschlagstation positioniert werden kann. Die Anstandsmesssensoren stellen zusätzliche Bauteile an dem Routenzuganhänger dar, die nur die Funktion erfüllen, für die richtige Positionierung des Routenzuganhängers in Fahrzeugquerrichtung an der Übernahmestation den seitlichen Abstand des Routenzuganhängers zur Übernahmestation zu messen. Sofern weiterhin überprüft werden muss, ob der Routenzuganhänger parallel zur Übernahmestation steht, sind zwei Abstandsmesssensoren an dem Routenzuganhänger zu verbauen. Derartige zusätzliche Abstandmesssensoren führen somit zu einem zusätzlichen Bauaufwand des Routenzuganhängers und erhöhen die Ausfallwahrscheinlichkeit des Routenzuganhängers.

Die WO 2019/063201 A1 offenbart ein gattungsgemäßes System mit den Merkmalen des Oberbegriffs des Patentanspruchs 1.

Aus der US 5 664 929 A ist ein Artikeltransportsystem bekannt, umfassend ein Transportfahrzeug, das mit elektrischer Energie aus einer am Fahrzeug montierten Batterie angetrieben wird, und eine Station mit einer Übersetzervorrichtung zum Übertragen eines Artikels zum und vom Fahrzeug. Die Station umfasst eine Stromempfangseinheit zum Empfangen elektrischer Energie zum Antreiben der Übersetzervorrichtung. Das Transportfahrzeug umfasst Stromversorgungsvorrichtungen zum Zuführen der elektrischen Energie von der Batterie zur Stromempfangseinheit.

Der vorliegenden Erfindung liegt die Aufgabe zugrunde, ein System der eingangs genannten Gattung zur Verfügung zu stellen, das eine richtige Positionierung des Routenzuganhängers in Fahrzeugquerrichtung an einer stationären Übernahmestation mit geringem Bauaufwand und geringer Ausfallwahrscheinlichkeit ermöglicht.

Diese Aufgabe wird erfindungsgemäß dadurch gelöst, dass die elektrischen Kontakte in Fahrzeugquerrichtung bewegbar am Routenzuganhänger angeordnet sind, wobei eine elektronische Steuerungseinheit vorgesehen ist, die derart ausgebildet ist, dass die Kontaktierung der beiden Kontakte mit den Gegenkontakten überwacht wird und im Fall der Nicht-Kontaktierung zumindest eines Kontaktes eine unrichtige Positionierung des Routenzuganhängers an der Übernahmestation festgestellt wird.

Der erfindungsgemäße Gedanke besteht somit darin, die bereits vorhandenen elektrischen Kontakte des Routenzuganhängers als Positionserkennungssystem bzw. Positioniersystem zu verwenden, mit dem der Routenzuganhänger an der stationären Übernahmestation in Fahrzeugquerrichtung richtig positioniert wird. Durch die Überwachung in der elektronischen Steuerungseinheit, ob die beiden Kontakte des Routenzuganhängers mit den Gegenkontakten der stationären Übernahmestation kontaktiert sind oder nicht, kann auf einfache Weise und ohne zusätzliche weitere Sensoren erkannt werden, ob der Routenzuganhänger an der Übernahmestation in Fahrzeugquerrichtung richtig positioniert ist. Gemäß der Erfindung sind die beiden elektrischen Kontakte in Fahrzeuglängsrichtung voneinander beabstandet am Routenzuganhänger angeordnet. Dies ermöglicht es, mit den beiden elektrischen Kontakten weiterhin zu überprüfen, ob der Routenzuganahänger parallel zur stationären Übernahmestation steht und positioniert ist. Mit der Überwachung der Kontaktierung der beiden elektrischen Kontakte des Routenzuganhängers mit den Gegenkontakten der stationären Übernahmestation kann somit in einfacher Weise der richtige seitliche Abstand und die Parallelstellung des Routenzuganhängers an der stationären Übernahmestation festgestellt und überprüft werden. Sofern die Überwachung der Kontaktierung der beiden elektrischen Kontakte des Routenzuganhängers mit den Gegenkontakten der stationären Übernahmestation das Ergebnis liefert, dass beide Kontakte mit den Gegenkontakten kontaktiert sind, ist der Routenzuganhänger in Fahrzeugquerrichtung richtig an der Übernahmestation positioniert und steht der Routenzuganhänger mit richtigem seitlichen Abstand und parallel an der Übernahmestation. Sofern die Überwachung der Kontaktierung der beiden elektrischen Kontakte des Routenzuganhängers mit den Gegenkontakten der stationären Übernahmestation das Ergebnis liefert, dass einer der beiden Kontakte nicht kontaktiert ist, ist der Routenzuganhänger in Fahrzeugquerrichtung unrichtig an der Übernahmestation positioniert und steht der Routenzuganhänger nicht parallel zur Übernahmestation. Sofern die Überwachung der Kontaktierung der beiden elektrischen Kontakte des Routenzuganhängers mit den Gegenkontakten der stationären Übernahmestation das Ergebnis liefert, dass beide Kontakte nicht kontaktiert ist, ist der Routenzuganhänger in Fahrzeugquerrichtung unrichtig an der Übernahmestation positioniert und steht der Routenzuganhänger mit zu großem seitlichen Abstand an der Übernahmestation. Das erfindungsgemäße Positioniersystem und das erfindungsgemäße Positionserkennungssystem unter Verwendung der bereits vorhandenen elektrischen Kontakte des Routenzuganhängers ermöglicht somit bei geringem Kostenaufwand und geringer Ausfallwahrscheinlichkeit eine exakte Positionierung des Routenzuganhängers an der Übernahmestation in Fahrzeugquerrichtung und in einer parallelen Stellung zur Übernahmestation für eine Lastübergabe.

Gemäß einer bevorzugten Ausgestaltungsform der Erfindung steht die elektronische Steuerungseinheit mit einem Fahrantrieb des Routenzugs in Verbindung und ist derart ausgebildet, dass im Fall einer unrichtigen Positionierung des Routenzuganhängers an der Übernahmestation ein Steuerbefehl an den Fahrantrieb zur Neupositionierung der Umschlagposition erzeugt wird. Für den Fall, dass einer oder beide Kontakte nicht mit dem entsprechenden Gegenkontakt kontaktiert ist und somit eine unrichtigen Positionierung des Routenzuganhängers an der Übernahmestation vorliegt, erzeugt die elektronische Steuerungseinheit einen Steuerbefehl an den Fahrantrieb zur Neupositionierung des Routenzuganhängers der Umschlagposition, so dass bei zu großem seitlichen Abstand und/oder bei nicht paralleler Stellung des Routenzuganhängers an der Übernahmestation eine Neupositionierung des Routenzuganhängers an der Übernahmestation erfolgt, um den Routenzuganhäner im richtigen seitlichen Abstand und parallel zur Übernahmestation anzuhalten. Dadurch kann der Routenzug selbstständig den Routenzuganhänger an der Übernahmestation neu positionieren, um den Routenzuganhänger mit richtigem seitlichen Abstand und parallel an der Übernahmestation auszurichten und zu positionieren.

Gemäß einer vorteilhaften Ausführungsform der Erfindung ist ein erster elektrischer Kontakt in einer vorderen Hälfte des Routenzuganhängers und ein zweiter Kontakt in einer hinteren Hälfte des Routenzuganhängers angeordnet. Dadurch ist ein großer Abstand der beiden elektrischen Kontakte in Fahrzeuglängsrichtung des Routenzuganhängers erzielbar, der es in einfacher Weise ermöglicht, mit der Überwachung der Kontaktierung der beiden Kontakte die Parallelstellung des Routenzuganhängers an der Übernahmestation zu erkennen.

Gemäß einer vorteilhaften Ausführungsform der Erfindung sind die beiden Kontakte mittels eines Stellantriebs in Fahrzeugquerrichtung zwischen einer eingefahrenen Position und einer ausgefahrenen Position verstellbar, wobei die elektronische Steuerungseinheit derart ausgebildet ist, dass in der Umschlagposition ein Steuerbefehl an den Stellantrieb zum Ausfahren der Kontakte in die ausgefahrene Position erzeugt wird. In der Umschlagposition werden somit die Kontakte mittel der Steuerungseinheit von der eingefahrenen Position in die ausgefahrene Position verstellt und anschließend in der ausgefahrenen Position der Kontakte von der Steuerungseinheit überwacht, ob die beiden Kontakte des Routenzuganhängers die Gegenkontakte der Übernahmestation kontaktieren, um die seitliche Position und Parallelität des Routenzuganhängers an der Übernahmestation zu erkennen.

Besondere Vorteile ergeben sich, wenn gemäß einer Weiterbildung der Erfindung die Kontakte als federbelastete Kontaktstifte ausgebildet sind. Sofern die Kontakte zwischen der eingefahrenen Position und der ausgefahrenen Position um einen fest vorgegebenen Ausschubweg ausgefahren werden, kann mit federbelasteten Kontaktstiften in einfacher Weise ein Ausgleich des Ausschubwegs erfolgen, wenn die Kontakte innerhalb des Ausschubwegs mit den Gegenkontakten an der Übernahmestation kontaktieren.

Gemäß einer vorteilhaften Ausgestaltungsform der Erfindung ist der Stellantrieb als Zahnstangenantrieb ausgebildet. Mit einem Zahnstangenantrieb können die beiden kontakte in einfacher Weise in Fahrzeugquerrichtung in horizontaler Richtung ausgefahren und eingefahren werden.

Gemäß einer vorteilhaften Weiterbildung der Erfindung ist die Übernahmestation mit einer Datenkommunikationseinrichtung versehen, die bei Kontaktierung der beiden Kontakte mit den Gegenkontakten mit elektrischer Energie vom Routenzug versorgbar ist und bei elektrischer Energieversorgung ein Bestätigungssignal erzeugt, wobei die elektronische Steuerungseinheit anhand des Bestätigungssignals der Datenkommunikationseinrichtung die Kontaktierung der beiden Kontakte mit den Gegenkontakten überwacht. Sofern im Falle einer richtigen Positionierung des Routenzuganhängers an der Übernahmestation beide Kontakte des Routenzuganhängers mit den Gegenkontakten der Übernahmestation kontaktieren, wird die Datenkommunikationseinrichtung der Übernahmestation mit elektrischer Energie von dem Routenzug versorgt und kann ein entsprechendes Bestätigungssignal erzeugen und ausgeben, welches von der elektronischen Steuerungseinheit empfangen wird. Sofern im Falle einer unrichtigen Positionierung des Routenzuganhängers an der Übernahmestation ein oder beide Kontakte des Routenzuganhängers mit den Gegenkontakten nicht kontaktieren, wird die Datenkommunikationseinrichtung der Übernahmestation nicht mit elektrischer Energie von dem Routenzug versorgt und kann somit kein entsprechendes Bestätigungssignal erzeugen und ausgeben. Anhand des bei erfolgreicher Kontaktierung der beiden Kontakte mit den Gegenkontakten vorhandenem Bestätigungssignal bzw. bei nichterfolgreicher Kontaktierung der beiden Kontakte mit den Gegenkontakten ausbleibendem Bestätigungssignals kann somit von der Steuerungseinheit in einfacher Weise die Kontaktierung der beiden Kontakte mit den Gegenkontakten überwacht werden im Fall der Nicht-Kontaktierung zumindest eines Kontaktes und ausbleibendem Bestätigungssignal der Datenkommunikationseinrichtung eine unrichtige Positionierung des Routenzuganhängers an der Übernahmestation festgestellt werden. Erfindungsgemäß wird somit die elektrische Verbindung über die beiden elektrischen Kontakte und die Datenkommunikationseinrichtung genutzt, um den richtigen seitlichen Abstand und die Parallelstellung des Routenzuganhängers an der Übernahmestation festzustellen.

Die Datenkommunikationseinrichtung ist bevorzugt als Datenlichtschranke ausgebildet. Das Bestätigungssignal kann somit kabellos von der Übernahmestation zu der Steuerungseinheit des Routenzugs übertragen werden.

Vorteilhafterweise sind gemäß einer Weiterbildung der Erfindung an der in Fahrtrichtung des Routenzuganhängers linken Seite und rechten Seite des Routenzuganhängers jeweils zwei elektrische Kontakte angeordnet. Dadurch ist der Routenzug universal einsetzbar und kann für eine Lastübergabe zur linken Seite und zur rechten Seite eingesetzt werden.

Der Routenzug kann manuell durch einen Fahrer betrieben sein. Besondere Vorteile ergeben sich, wenn der Routenzug autonom und somit fahrerlos betrieben ist. Für den autonomen Routenzug muss bei der Erfindung nur eine bestimmte Fahrspur vorgegeben werden, gemäß der der Routenzug in einem definierten seitlichen Abstand entlang der Übernahmestationen vorbeifährt. Die jeweiligen Routenzuganhänger werden mit dem erfindungsgemäßen Positionserkennungssystem und Positioniersystem, das die beiden elektrischen Kontakte nutzt, an der jeweiligen Übernahmestationen im richtigen seitlichen Abstand und parallel zur Übernahmestation positioniert. Bei einem autonomen Routenzug kann das Zugfahrzeug als fahrerlos und automatisiert betriebener Schlepper ausgebildet sein oder alternativ von einem fahrerlosen Transportsystem, einem sogenannten FTS, gebildet sein.

Gemäß einer bevorzugten Weiterbildung der Erfindung weist die Übernahmestation eine elektrisch betriebene Fördereinrichtung zur Lastübergabe einer Last auf, wobei die Fördereinrichtung bei Kontaktierung der beiden Kontakte mit den Gegenkontakten mit elektrischer Energie vom Routenzug versorgbar ist. Dadurch kann die Übernahmestation mittels der Fördereinrichtung eine Last automatisch an den Routenzuganhänger übergeben oder von dem Routenzuganhänger aufnehmen, wodurch bei einem autonomen Routenzug ein vollautomatischer Betrieb erzielt wird. Die Fördereinrichtung kann als motorisch angetriebene Rollenbahn, als Bandförderer oder als Kettenförderer ausgebildet sein. Vorteilhafterweise ist hierzu der Routenzuganhänger ebenfalls mit einer entsprechenden Fördereinrichtung zur Lastübergabe der Last versehen.

Die Aufgabe wird ebenfalls durch ein Verfahren zum Betrieb eines erfindungsgemäßen Systems gelöst, bei dem von dem Routenzug in einem ersten Schritt die Umschlagposition des Routenzuganhängers an der stationären Übernahmestation angefahren wird, in einem folgenden zweiten Schritt die beiden Kontakte in die ausgefahrene Position verstellt werden, in einem folgenden dritten Schritt von der elektronischen Steuerungseinheit überwacht wird, ob ein Bestätigungssignals der Datenkommunikationseinrichtung vorliegt und bei Ausbleiben des Bestätigungssignals von der elektronischen Steuerungseinheit eine unrichtige Positionierung des Routenzuganhängers an der Übernahmestation festgestellt wird. Das erfindungsgemäße Verfahren ermöglicht es, unter Verwendung der bereits vorhandenen elektrischen Kontakte des Routenzuganhängers bei geringem Kostenaufwand eine Positionierungserkennung des Routenzuganhängers an der Übernahmestation in Fahrzeugquerrichtung durchzuführen, mit dem der seitliche Abstand des Routenzuganhängers an der Übernahmestation und die Parallelstellung des Routenzuganhängers an der Übernahmestation festgestellt werden kann.

Gemäß einer vorteilhaften Weiterbildung des Verfahrens wird von der elektronischen Steuerungseinheit bei Ausbleiben des Bestätigungssignals ein Steuerbefehl an den Fahrantrieb des Routenzugs zur Neupositionierung der Umschlagposition erzeugt. Dadurch kann der Routenzug bei einer festgestellten unrichtigen Positionierung des Routenzuganhängers in Fahrzeugquerrichtung an der Übernahmestation selbstständig den Routenzuganhänger an der Übernahmestation neu positionieren, um den Routenzuganhänger mit richtigem seitlichen Abstand und parallel an der Übernahmestation auszurichten und zu positionieren.

Die Erfindung weist eine Reihe von Vorteilen auf.

Die erfindungsgemäße Positionserkennung unter Verwendung der bereits vorhandenen elektrischen Kontakte des Routenzuganhängers ermöglicht es ohne zusätzliche Abstandsmesssensoren den seitlichen Abstand des Routenzuganhängers an der Übernahmestation in Fahrzeugquerrichtung und eine parallele Stellung des Routenzuganhängers an der Übernahmestation zu erkennen. Da keine zusätzlichen Abstandsmesssensoren für diese Funktionen erforderlich sind, ergibt sich ein kostengünstiger Aufbau des Routenzuganhängers mit einer hohen Ausfallsicherheit.

Weitere Vorteile und Einzelheiten der Erfindung werden anhand des in den schematischen Figuren dargestellten Ausführungsbeispiels näher erläutert. Hierbei zeigt
- Figur 1: ein erfindungsgemäßes System in einer perspektivischen Darstellung,
- Figur 2: eine Vorderansicht eines erfindungsgemäßen Routenzuganhängers an einer stationären Übernahmestation,
- Figur 3: eine Vorderansicht gemäß der Figur 2 in einer ersten Position,
- Figur 4: eine Draufsicht der Figur 3,
- Figur 5: eine Vorderansicht gemäß der Figur 2 in einer zweiten Position,
- Figur 6: eine Draufsicht der Figur 5 und
- Figur 7: eine Draufsicht auf einen Routenzuganhängers an einer stationären Übernahmestation in einer dritten Position.

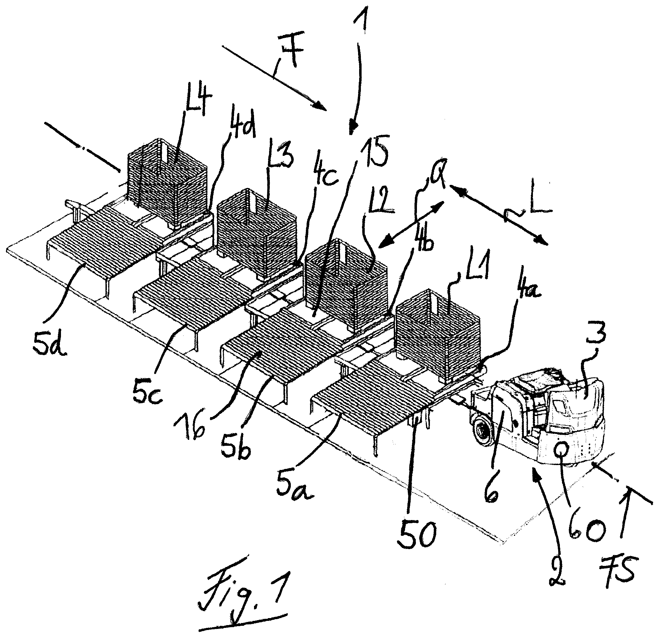

In der Figur 1 ist ein erfindungsgemäßes System 1 dargestellt, das zur Übergabe von Lasten L1-L4 zwischen einem Routenzuganhänger 4a-4d eines Routenzugs 2 und mindestens einer stationären, ortsfesten Übernahmestation 5a-5d besteht.

Das System 1 umfasst einen Routenzug 2, der ein Zugfahrzeug 3 und mindestens einen Routenzuganhänger 4a, 4b, 4c, 4d aufweist, und mindestes eine stationäre Übernahmestation 5a, 5b, 5c, 5d. Zur Übergabe von Lasten L1, L2, L3, L4 zwischen einem der Routenzuganhänger 4a-4d und einer der stationären Übernahmestation 5a-5d befindet sich der entsprechende Routenzuganhänger 4a-4d in einer definierten Umschlagposition relativ zu der entsprechenden stationären Übernahmestation 5a-5d. In der definierten Umschlagposition befindet sich der entsprechende Routenzuganhänger 4a-4d - wie in der Figur 1 dargestellt ist - in einem vorgegebenen seitlichen Abstand seitlich neben der entsprechenden Übernahmestation 5a-5d, so dass die entsprechende Last L1-L4 in seitlicher Richtung Q von dem Routenzuganhänger 4a-4d auf die Übernahmestation 5a-5d bewegt werden kann bzw. von der Übernahmestation 5a-5d auf den Routenzuganhänger 4a-4d bewegt werden kann.

Der Routenzug 2 ist bevorzugt autonom betrieben. Das Zugfahrzeug 3 ist von einem fahrerlosen Schlepper oder einem fahrerlosen Transportsystem gebildet, an den die Routenzuganhänger 4a-4d angehängt sind. Der autonome Routenzug 2 fährt mittels einer geeigneten, nicht näher dargestellten Sensorvorrichtung entlang der Übernahmestationen 5a-5d auf einer Fahrspur FS in einer Fahrtrichtung F.

Bei dem erfindungsgemäßen System 1 weist das Zugfahrzug 3 - wie in der Figur 1 dargestellt ist - ein batterie-elektrisches Antriebssystem mit einem elektrischen Fahrantrieb auf, wobei das Zugfahrzeug 3 eine Batterie 6, die vorzugsweise als Traktionsbatterie ausgebildet ist, aufweist, die den Fahrantrieb des Zugfahrzeugs 3 versorgt.

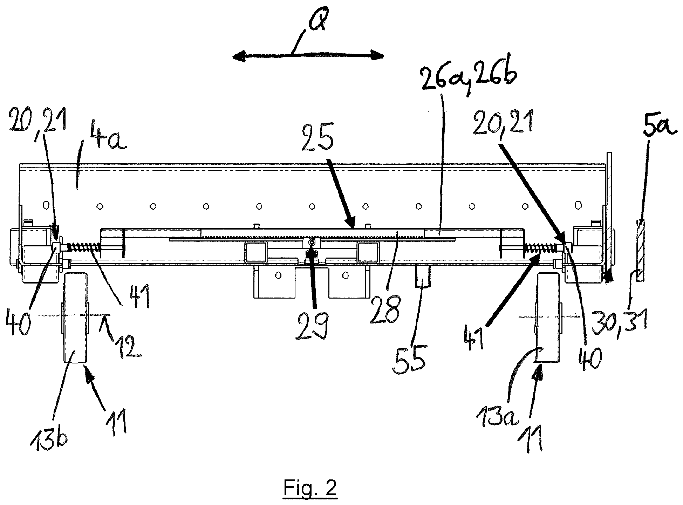

Die Routenzuganhänger 4a-4d weisen jeweils - wie in Verbindung mit der Figur 2 ersichtlich ist - ein Fahrwerk 11 auf, mit dem sich die Routenzuganhänger 4a-4d auf der Fahrbahn abstützen.

Jeder Routenzuganhänger 4a-4d kann - wie in der Figur 1 dargestellt ist - zur Lastübergabe mit einer elektromotorisch angetriebenen Fördereinrichtung 15 versehen sein. Die Fördereinrichtung 15 kann beispielsweise als elektromotorisch angetriebene Rollenbahn ausgebildet sein.

Weiterhin kann jede Übernahmestation 5a-5d zur Lastübergabe mit einer elektromotorisch angetriebenen Fördereinrichtung 16 versehen sein. Die Fördereinrichtung 16 kann beispielsweise als elektromotorisch angetriebene Rollenbahn ausgebildet sein.

Die Fördereinrichtung 15 der Routenzuganhänger 4a-4d und die Fördereinrichtung 16 der Übernahmestation 5a-5d sind bevorzugt in der definierten Umschlagposition von einer gemeinsamen Energiequelle angetrieben. Im dargestellten Ausführungsbeispiel wird hierzu die Batterie 6 des Routenzugs 2 genutzt. Um die Fördereinrichtung 16 der Übernahmestation 5a-5d in der definierten Umschlagposition mit elektrischer Energie aus der Batterie 6 des Routenzugs 2 versorgen zu können, ist jede Übernahmestation 5a-5d - wie in der Figur 2 dargestellt ist - mit nicht näher dargestellten Gegenkontakten 30, 31 versehen, die mit stromführenden elektrischen Kontakten 20, 21 der Routenzuganhängern 4a-4d in Verbindung bringbar sind. Die elektrischen Kontakte 20, 21 der Routenzuganhängern 4a-4d stehen zur Stromversorgung mit der Batterie 6 des Routenzugs 2 in Verbindung.

In der Figur 1 ist die definierte Umschlagposition zwischen dem Routenzuganhänger 4a-4d und der Übernahmestation 5a-5d dargestellt. Die Routenzuganhänger 4a-4d befindet sich in der definierten Umschlagposition mittig neben den Übernahmestationen 5a-5d.

Um die Routenzuganhänger 4a-4d in der Umschlagposition an der entsprechenden Übernahmestation 5a-5d in einem richtigen seitlichen Abstand in Fahrzeugquerrichtung Q zur Übernahmestation 5a-5d und parallel zu der Übernahmestation 5a-5d auszurichten, wird ein erfindungsgemäßes Positionserkennungssystem verwendet, das die elektrischen Kontakte 20, 21 der Routenzuganhänger 4a-4b nutzt.

Der Aufbau des erfindungsgemäßen Positionserkennungssystems wird im Folgenden anhand der Figuren 2 bis 7 näher beschrieben. Das erfindungsgemäße Positionserkennungssystem wird im Folgenden anhand des Routenzuganhängers 4a und der Übernahmestation 5a beschrieben. Es versteht sich, dass die restlichen Routenzuganhänger 4b, 4c, 4d und die restlichen Übernahmestationen 5b, 5c, 5d mit einem analog aufgebauten Positionserkennungssystem versehen sind.

Der Routenzuganhänger 4a weist zwei in Fahrzeuglängsrichtung L voneinander beabstandet angeordnete elektrische Kontakte 20, 21 auf, die in Fahrzeugquerrichtung Q bewegbar am Routenzuganhänger 4a angeordnet sind. Im dargestellten Ausführungsbeispiel weist der Routenzuganhänger 4a ein - in Fahrzeuglängsrichtung L gesehen - im Wesentlichen mittig angeordnetes Fahrwerk 11 auf, das eine Mittelachse 12 mit zwei Rädern 13a, 13b umfasst. Der erste elektrische Kontakt 20 ist vor der Mittelachse 12 in einer vorderen Hälfte des Routenzuganhängers 4a und der zweite elektrische Kontakt 21 hinter der Mittelachse 12 in der hinteren Hälfte des Routenzuganhängers 4a angeordnet ist.

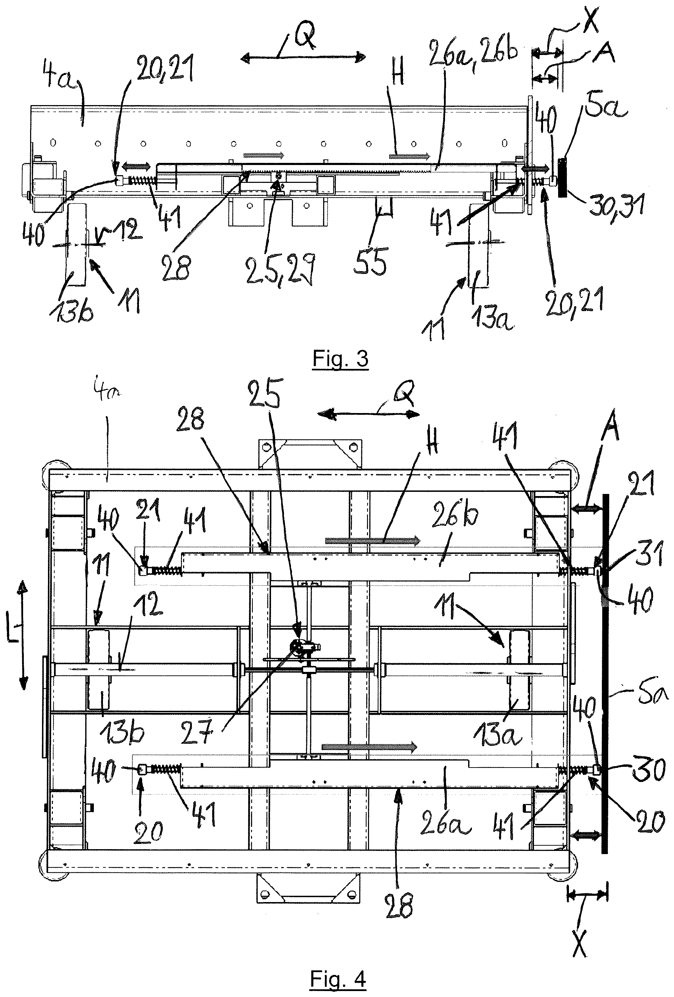

Die beiden Kontakte 20, 21 sind mittels eines Stellantriebs 25 in Fahrzeugquerrichtung Q zwischen einer in der Figur 2 dargestellten eingefahrenen Position und einer in den Figuren 3 bis 7 dargestellten ausgefahrenen Position verstellbar. Die Kontakte 20, 21 sind hierzu im dargestellten Ausführungsbeispiel an in Fahrzeugquerrichtung Q verschiebbar angeordneten Schlitten 26a, 26b angeordnet, die mittels eines Antriebsmotors 27 betätigbar sind. Im dargestellten Ausführungsbeispiel ist der Stellantrieb 25 als Zahnstangenantrieb ausgebildet, wobei die Schlitten 26a, 26b mit entsprechenden Zahnstangenprofilen 28 versehen sind, in die ein von der Antriebswelle des Antriebsmotors 27 angetriebenes Ritzel 29 eingreift.

Im dargestellten Ausführungsbeispiel sind in Fahrtrichtung F des Routenzuganhängers 4a an der linken Seite und an rechten Seite des Routenzuganhängers 4a jeweils zwei elektrische Kontakte 20, 21 angeordnet. Die Kontakte 20 sind hierzu an den beiden gegenüberliegenden äußeren Enden des Schlittens 26a und die Kontakte 21 an den beiden gegenüberliegenden äußeren Enden des Schlittens 26b angeordnet. Mit dem Stellantrieb 25 können hierbei entweder die an der linken Seite angeordneten Kontakte 20, 21 nach Außen ausgefahren werden oder die an der rechten Seite angeordneten Kontakte 20, 21 nach Außen ausgefahren werden.

Die Kontakte 20, 21 sind im dargestellten Ausführungsbeispiel jeweils als federbelastete Kontaktstifte 40 ausgebildet. Die Kontaktstifte 40 sind an den äußeren Enden der Schlitten 26a, 26b jeweils in Fahrzeugquerrichtung Q verschiebbar gelagert und mittels einer Federeinrichtung 41 nach außen beaufschlagt.

Die Gegenkontakte 30, 31 der Übernahmestation 5a sind von Kontaktplatten gebildet, die an der dem Routenzuganhänger 4a zugewandten Stirnseite der Übernahmestation 5a angeordnet sind.

Die Übernahmestation 5a ist mit einer Datenkommunikationseinrichtung 50 versehen ist, die bei Kontaktierung der beiden Kontakte 20, 21 mit den Gegenkontakten 30 ,31 mit elektrischer Energie vom Routenzug 2 versorgt wird und bei elektrischer Energieversorgung ein Bestätigungssignal erzeugt. Die Datenkommunikationseinrichtung 50 ist beispielsweise als Datenlichtschranke ausgebildet. Der Routenzug 2, beispielsweise der Routenzuganhänger 4a, ist mit einer elektronischen Steuerungseinheit 55 versehen, die das Bestätigungssignal der Datenkommunikationseinrichtung 50 der stationären Übernamestation 5a empfangen kann. Die elektronische Steuerungseinheit 55 steht weiterhin mit dem Stellantrieb 25 der Kontakte 20, 21 in Verbindung, um die Kontakte 20, 21 von der eingefahrenen Position in die ausgefahrenen Position zu betätigen. Weiterhin steht die elektronische Steuerungseinheit 55 mit einem Fahrantrieb 60 des Routenzugs 1 in Verbindung.

Die Funktion des erfindungsgemäßen Positionserkennungssystems wird im Folgenden anhand der Figuren 2 bis 7 näher beschrieben.

Im normalen Fahrbetrieb des Routenzugs 2 befinden sich die Kontakte 20, 21 in der in der Figur 2 dargestellten eingefahrene Position. Sobald der Routenzuganhänger 4a eine Übernahmestation 5a angefahren hat und an einer entsprechenden Übernahmestation 5a in Fahrtrichtung F positioniert ist und in der Umschlagposition anhält, wird der Stellantrieb 25 von der Steuerungseinheit 55 derart angesteuert, dass die stromführenden Kontakte 20, 21 um einen vorgegebenen Hub H an der der Übernahmestation 5a zugewandten Fahrzeugseite in die ausgefahrene Position ausfahren. Hierzu wird der Antriebsmotor 27 betätigt, so dass die Schlitten 26a, 26b mit den daran angeordneten federbelasteten Kontaktstiften 40 um den vorgegebenen Hub H in Fahrzeugquerrichtung Q seitlich ausfahren. Aufgrund des Hubs H fahren die Kontakte 20, 21 an der seitlichen Fahrzeugkontur des Routenzuganhängers 4a um ein vorgegebenes seitliches Ausfahrmaß X in Fahrzeugquerrichtung Q nach außen aus.

Sofern sich die Übernahmestation 5a bzw. die Gegenkontakte 30, 31 - wie in den Figuren 3 und 4 dargestellt ist - in der Umschlagposition innerhalb des von dem vorgegebenen Hub H erzeugten seitlichen Ausfahrmaß X der Kontakte 20, 21 befindet, d.h. der seitliche Abstand A zwischen der Übernahmestation 5a bzw. den Gegenkontakten 30, 31 und dem Routenzuganhänger 4a kleiner als das seitliche Ausfahrmaß X der Kontakte 20, 21 ist, und somit der Routenzuganhänger 4a im richtigen seitlichen Abstand und parallel zur Übernahmestation 5a positioniert ist, werden von den beiden Kontakten 20, 21 die Gegenkontakte 30, 31 an der Übernahmestation 5a kontaktiert und somit beide elektrischen Kontakte 20, 21 geschlossen. Die Federeinrichtungen 41 an den Kontaktstifte 40 gleichen hierbei den Hub H aus. Dadurch wird die Stromversorgung der Übernahmestation 5a durch den Routenzug 2 ermöglicht, so dass die Datenkommunikationseinrichtung 50 der Übernahmestation 5a ein entsprechendes Bestätigungssignal generiert und absendet. Das Bestätigungssignal wird von der Steuerungseinheit 55 des Routenzugs 2 empfangen, so dass die Fördereinrichtung 15, 16 betrieben werden können, um die Last L1 von dem Routenzuganhänger 4a an die Übernahmestation 5a übergeben zu können bzw. von der Übernahmestation 5a an den Routenzuganhänger 4a übergeben zu können.

Von der Steuerungseinheit 55 wird hierbei anhand des Bestätigungssignals der Datenkommunikationseinrichtung 50 die Kontaktierung der beiden Kontakte 20, 21 überwacht und bei Vorhandensein des Bestätigungssignals eine richtige Positionierung des Routenzuganhängers 4a an der Übernahmestation 5a mit richtigem seitlichen Abstand und parallel zur Übernahmestation erkannt.

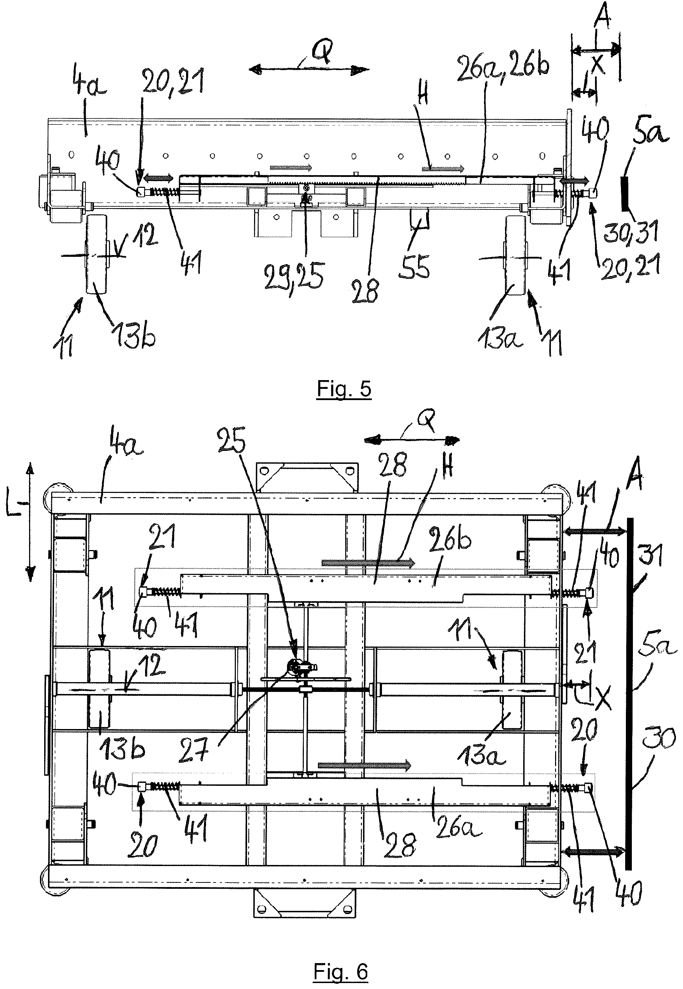

Sofern sich die Übernahmestation 5a bzw. die Gegenkontakte 30, 31 - wie in den Figuren 5 und 6 dargestellt ist - in der Umschlagposition außerhalb des von dem vorgegebenen Hub H erzeugten seitlichen Ausfahrmaß X der Kontakte 20, 21 befindet, d.h. der seitliche Abstand A zwischen der Übernahmestation 5a bzw. den Gegenkontakten 30, 31 und dem Routenzuganhänger 4a größer als das seitliche Ausfahrmaß X der Kontakte 20, 21 ist, werden von den beiden Kontakten 20, 21 die Gegenkontakte 30, 31 an der Übernahmestation 5a nicht erreicht und somit beide Kontakte 20, 21 nicht kontaktiert. Beide Kontakte 20, 21 bleiben somit geöffnet. Dadurch wird keine Stromversorgung der Übernahmestation 5a durch den Routenzug 2 ermöglicht, so dass die Datenkommunikationseinrichtung 50 der Übernahmestation 5a kein entsprechendes Bestätigungssignal generieren und absenden kann.

Von der Steuerungseinheit 55 wird hierbei nach dem Betätigen der Kontakte 20, 21 in die ausgefahrene Position anhand des Bestätigungssignals der Datenkommunikationseinrichtung 50 die Kontaktierung der beiden Kontakte 20, 21 überwacht und beim Ausbleiben des Bestätigungssignals und somit einer Nichtkontaktierung beider Kontakte 20, 21 eine unrichtige Positionierung des Routenzuganhängers 4a an der Übernahmestation 5a mit zu großem seitlichen Abstand erkannt und festgestellt. Im Fall einer unrichtigen Positionierung des Routenzugsanhängers 4a an der Übernahmestation 5a und somit beim Ausbleiben des Bestätigungssignals wird von der Steuerungseinheit 55 ein Steuerbefehl an die Fahrsteuerung 60 ausgegeben, den Routenzuganhänger 4a an der Übernahmestation 5a neu zu positionieren.

Für die Neupositionierung des Routenzuganhängers 4a an der Übernahmestation 5a kann eine entsprechende korrigierte Fahrspur FS vorgegeben werden oder im Wege des Prinzips "Versuch und Irrtum" der Routenzuganhänger 4a an der Übernahmestation 5a neu positioniert werden.

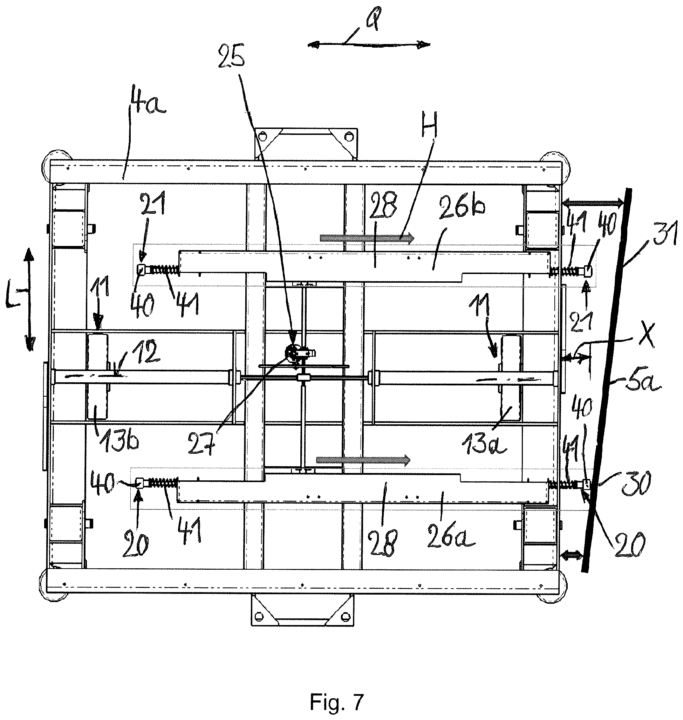

Sofern der Routenzuganhänger 4a - wie in der Figur 7 dargestellt ist - in der Umschlagposition schräg und somit nicht parallel zur Übernahmestation 5a positioniert ist, werden von einem der beiden Kontakte 20 bzw. 21, die beide um das seitliche Ausfahrmaß X in Fahrzeugquerrichtung Q ausfahren, der entsprechende Gegenkontakt 30 bzw. 31 an der Übernahmestation 5a kontaktiert und von dem anderen der beiden Kontakte 21 bzw. 20 der entsprechende Gegenkontakt 31 bzw. 30 an der Übernahmestation 5a nicht erreicht, so dass nur einer der beiden Kontakte 20 bzw. 21 kontaktiert. Der andere Kontakt 21 bzw. 20 bleibt somit geöffnet. Dadurch wird keine Stromversorgung der Übernahmestation 5a durch den Routenzug 2 ermöglicht, so dass die Datenkommunikationseinrichtung 50 der Übernahmestation kein entsprechendes Bestätigungssignal generieren und absenden kann.

Von der Steuerungseinheit 55 wird hierbei nach dem Betätigen der Kontakte 20, 21 in die ausgefahrene Position anhand des Bestätigungssignals der Datenkommunikationseinrichtung 50 die Kontaktierung der beiden Kontakte 20, 21 überwacht und beim Ausbleiben des Bestätigungssignals und somit einer Nichtkontaktierung eines der beiden Kontakte 20 bzw. 21 eine unrichtige Positionierung des Routenzuganhängers 4a an der Übernahmestation 5a mit einer nicht parallelen Ausrichtung des Routenzuganhängers 4 an der Übernahmestation 5a erkannt und festgestellt. Im Fall einer unrichtigen Positionierung des Routenzugsanhängers 4a an der Übernahmestation 5a und somit beim Ausbleiben des Bestätigungssignals wird von der Steuerungseinheit 55 ein Steuerbefehl an die Fahrsteuerung 60 ausgegeben, den Routenzuganhänger 4a an der Übernahmestation 5a neu zu positionieren.

Für die Neupositionierung des Routenzuganhängers 4a an der Übernahmestation 5a kann eine entsprechende korrigierte Fahrspur FS vorgegeben werden oder im Wege des Prinzips "Versuch und Irrtum" der Routenzuganhänger 4a an der Übernahmestation 5a neu positioniert werden.

## Patentansprüche

1. System (1) umfassend einen Routenzug (2), der ein Zugfahrzeug (3) und mindestens einen Routenzuganhänger (4a; 4b; 4c; 4d) aufweist, und mindestes eine stationäre Übernahmestation (5a; 5b; 5c; 5d) zur Übergabe von Lasten (L1; L2; L3; L4) zwischen dem Routenzuganhänger (4a; 4b; 4c; 4d) und der stationären Übernahmestation (5a; 5b; 5c; 5d), wobei sich der Routenzuganhänger (4a; 4b; 4c; 4d) zur Lastübergabe in einer Umschlagposition relativ zur stationären Übernahmestation (5a; 5b; 5c; 5d) befindet, wobei eine elektrische Energieversorgung der stationären Übernahmestation (5a; 5b; 5c; 5d) von dem Routenzuganhänger (4a; 4b; 4c; 4d) erfolgt und der Routenzuganhänger (4a; 4b; 4c; 4d) zur Energieversorgung der stationären Übernahmestation (5a; 5b; 5c; 5d) mit elektrischen Kontakten (20, 21) versehen ist, die in der Umschlagposition mit Gegenkontakten (30, 31) der stationären Übernahmestation (5a; 5b; 5c; 5d) kontaktierbar sind, wobei der Routenzuganhänger (4a; 4b; 4c; 4d) zwei in Fahrzeuglängsrichtung (L) voneinander beabstandet angeordnete elektrische Kontakte (20, 21) aufweist, **dadurch gekennzeichnet, dass** die elektrischen Kontakte (20, 21) in Fahrzeugquerrichtung (Q) bewegbar am Routenzuganhänger (4a; 4b; 4c; 4d) angeordnet sind, wobei eine elektronische Steuerungseinheit (55) vorgesehen ist, die derart ausgebildet ist, dass die Kontaktierung der beiden Kontakte (20, 21) mit den Gegenkontakten (30, 31) überwacht wird und im Fall der Nicht-Kontaktierung zumindest eines Kontaktes (20; 21) eine unrichtige Positionierung des Routenzuganhängers (4a; 4b; 4c; 4d) an der Übernahmestation (5a; 5b; 5c; 5d) festgestellt wird.

2. System nach Anspruch 1, **dadurch gekennzeichnet, dass** die elektronische Steuerungseinheit (55) mit einem Fahrantrieb (60) des Routenzugs (2) in Verbindung steht und derart ausgebildet ist, dass im Fall einer unrichtigen Positionierung des Routenzuganhängers (4a; 4b; 4c; 4d) an der Übernahmestation (5a; 5b; 5c; 5d) ein Steuerbefehl an den Fahrantrieb (60) zur Neupositionierung der Umschlagposition erzeugt wird.

3. System nach Anspruch 1 oder 2, **dadurch gekennzeichnet, dass** ein erster elektrischer Kontakt (20) in einer vorderen Hälfte des Routenzuganhängers (4a; 4b; 4c; 4d) und ein zweiter Kontakt (21) in einer hinteren Hälfte des Routenzuganhängers (4a; 4b; 4c; 4d) angeordnet ist.

4. System nach einem der Ansprüche 1 bis 3, **dadurch gekennzeichnet, dass** die beiden Kontakte (20, 21) mittels eines Stellantriebs (25) in Fahrzeugquerrichtung (Q) zwischen einer eingefahrenen Position und einer ausgefahrenen Position verstellbar sind, wobei die elektronische Steuerungseinheit (55) derart ausgebildet ist, dass in der Umschlagposition ein Steuerbefehl an den Stellantrieb (25) zum Ausfahren der Kontakte (20, 21) in die ausgefahrene Position erzeugt wird.

5. System nach einem der Ansprüche 1 bis 4, **dadurch gekennzeichnet, dass** die Kontakte (20, 21) als federbelastete Kontaktstifte (40) ausgebildet sind.

6. System nach Anspruch 4 oder 5, **dadurch gekennzeichnet, dass** der Stellantrieb (25) als Zahnstangenantrieb ausgebildet ist.

7. System nach einem der Ansprüche 1 bis 6, **dadurch gekennzeichnet, dass** die Übernahmestation (5a; 5b; 5c; 5d) mit einer Datenkommunikationseinrichtung (50) versehen ist, die bei Kontaktierung der beiden Kontakte (20, 21) mit den Gegenkontakten (30, 31) mit elektrischer Energie vom Routenzug (2) versorgbar ist und bei elektrischer Energieversorgung ein Bestätigungssignal erzeugt, wobei die elektronische Steuerungseinheit (55) anhand des Bestätigungssignals der Datenkommunikationseinrichtung (50) die Kontaktierung der beiden Kontakte (20, 21) mit den Gegenkontakten (30, 31) überwacht.

8. System nach einem der Ansprüche 1 bis 7, **dadurch gekennzeichnet, dass** an der in Fahrtrichtung (F) des Routenzuganhängers (4a; 4b; 4c; 4d) linken Seite und rechten Seite des Routenzuganhängers (4a; 4b; 4c; 4d) jeweils zwei elektrische Kontakte (20, 21) angeordnet sind.

9. System nach einem der Ansprüche 1 bis 8, **dadurch gekennzeichnet, dass** der Routenzug (2) autonom betrieben ist.

10. System nach einem der Ansprüche 1 bis 9, **dadurch gekennzeichnet, dass** die Übernahmestation (5a; 5b; 5c; 5d) eine elektrisch betriebene Fördereinrichtung (16) zur Lastübergabe einer Last (L1; L2; L3; L4) aufweist, wobei die Fördereinrichtung (16) bei Kontaktierung der beiden Kontakte (20, 21) mit den Gegenkontakten (30, 31) mit elektrischer Energie vom Routenzug (2) versorgbar ist.

11. Verfahren zum Betrieb eines Systems (1) nach einem der vorangegangenen Ansprüche, **dadurch gekennzeichnet, dass** von dem Routenzug (2) in einem ersten Schritt die Umschlagposition des Routenzuganhängers (4a; 4b; 4c; 4d) an der stationären Übernahmestation (5a; 5b; 5c; 5d) angefahren wird, in einem folgenden zweiten Schritt die beiden Kontakte (20, 21) in die ausgefahrene Position verstellt werden, in einem folgenden dritten Schritt von der elektronischen Steuerungseinheit (55) überwacht wird, ob ein Bestätigungssignals der Datenkommunikationseinrichtung (50) vorliegt, und bei Ausbleiben des Bestätigungssignals von der elektronischen Steuerungseinheit (55) eine unrichtige Positionierung des Routenzuganhängers (4a; 4b; 4c; 4d) an der Übernahmestation (5a; 5b; 5c; 5d) festgestellt wird.

12. Verfahren nach Anspruch 11, **dadurch gekennzeichnet, dass** von der elektronischen Steuerungseinheit (55) bei Ausbleiben des Bestätigungssignals ein Steuerbefehl an den Fahrantrieb (60) des Routenzugs (2) zur Neupositionierung der Umschlagposition erzeugt wird.

## Claims

1. System (1) comprising a tugger train (2), which has a towing vehicle (3) and at least one tugger train trailer (4a; 4b; 4c; 4d), and at least one stationary transfer station (5a; 5b; 5c; 5d) for transferring loads (L1; L2; L3; L4) between the tugger train trailer (4a; 4b; 4c; 4d) and the stationary transfer station (5a; 5b; 5c; 5d), wherein the tugger train trailer (4a; 4b; 4c; 4d) for load transfer is in a handling position relative to the stationary transfer station (5a; 5b; 5c; 5d), wherein electrical energy is supplied to the stationary transfer station (5a; 5b; 5c; 5d) by the tugger train trailer (4a; 4b; 4c; 4d) and the tugger train trailer (4a; 4b; 4c; 4d), for supplying energy to the stationary transfer station (5a; 5b; 5c; 5d), is provided with electrical contacts (20, 21) which can be contact-connected in the handling position to mating contacts (30, 31) of the stationary transfer station (5a; 5b; 5c; 5d), wherein the tugger train trailer (4a; 4b; 4c; 4d) has two electrical contacts (20, 21) arranged at a distance from each other in the vehicle longitudinal direction (L), **characterized in that** the electrical contacts (20, 21) are arranged on the tugger train trailer (4a; 4b; 4c; 4d) so as to be movable in the vehicle transverse direction (Q), wherein an electronic control unit (55) is provided and is configured in such a way that the contact-connection of the two contacts (20, 21) to the mating contacts (30, 31) is monitored and, if at least one contact (20; 21) is not contact-connected, incorrect positioning of the tugger train trailer (4a; 4b; 4c; 4d) at the transfer station (5a; 5b; 5c; 5d) is detected.

2. System according to Claim 1, **characterized in that** the electronic control unit (55) is connected to a traction drive (60) of the tugger train (2) and is configured in such a way that, in the case of incorrect positioning of the tugger train trailer (4a; 4b; 4c; 4d) at the transfer station (5a; 5b; 5c; 5d), a control command for the traction drive (60) to reposition the handling position is generated.

3. System according to Claim 1 or 2, **characterized in that** a first electrical contact (20) is arranged in a front half of the tugger train trailer (4a; 4b; 4c; 4d) and a second contact (21) is arranged in a rear half of the tugger train trailer (4a; 4b; 4c; 4d).

4. System according to one of Claims 1 to 3, **characterized in that** the two contacts (20, 21) are adjustable in the vehicle transverse direction (Q) between a retracted position and an extended position by means of an actuating drive (25), wherein the electronic control unit (55) is configured in such a way that, in the handling position, a control command for the actuating drive (25) to extend the contacts (20, 21) into the extended position is generated.

5. System according to one of Claims 1 to 4, **characterized in that** the contacts (20, 21) are in the form of spring-loaded contact pins (40).

6. System according to Claim 4 or 5, **characterized in that** the actuating drive (25) is in the form of a rack and pinion drive.

7. System according to one of Claims 1 to 6, **characterized in that** the transfer station (5a; 5b; 5c; 5d) is provided with a data communication device (50) which, when the two contacts (20, 21) are contact-connected to the mating contacts (30, 31), can be supplied with electrical energy by the tugger train (2) and generates a confirmation signal when supplied with electrical energy, wherein the electronic control unit (55) monitors the contact-connection of the two contacts (20, 21) to the mating contacts (30, 31) on the basis of the confirmation signal from the data communication device (50).

8. System according to one of Claims 1 to 7, **characterized in that** two electrical contacts (20, 21) are respectively arranged on the left-hand and right-hand sides of the tugger train trailer (4a; 4b; 4c; 4d) in the direction of travel (F) of the tugger train trailer (4a; 4b; 4c; 4d).

9. System according to one of Claims 1 to 8, **characterized in that** the tugger train (2) is operated autonomously.

10. System according to one of Claims 1 to 9, **characterized in that** the transfer station (5a; 5b; 5c; 5d) has an electrically operated conveyor (16) for transferring a load (L1; L2; L3; L4), wherein the conveyor (16) can be supplied with electrical energy by the tugger train (2) when the two contacts (20, 21) are contact-connected to the mating contacts (30, 31).

11. Method for operating a system (1) according to one of the preceding claims, **characterized in that**, in a first step, the tugger train (2) approaches the handling position of the tugger train trailer (4a; 4b; 4c; 4d) at the stationary transfer station (5a; 5b; 5c; 5d), in a subsequent, second step, the two contacts (20, 21) are adjusted into the extended position, in a subsequent, third step, the electronic control unit (55) monitors whether there is a confirmation signal from the data communication device (50), and, if the confirmation signal is absent, the electronic control unit (55) detects incorrect positioning of the tugger train trailer (4a; 4b; 4c; 4d) at the transfer station (5a; 5b; 5c; 5d).

12. Method according to Claim 11, **characterized in that**, if the confirmation signal is absent, the electronic control unit (55) generates a control command for the traction drive (60) of the tugger train (2) to reposition the handling position.

## Revendications

1. Système (1) comprenant un train logistique (2), lequel possède un véhicule tracteur (3) et au moins une remorque de train logistique (4a ; 4b ; 4c ; 4d), et au moins un poste de prise en charge fixe (5a ; 5b ; 5c ; 5d) servant au transfert de charges (L1 ; L2 ; L3 ; L4) entre la remorque de train logistique (4a ; 4b ; 4c ; 4d) et le poste de prise en charge fixe (5a ; 5b ; 5c ; 5d), la remorque de train logistique (4a ; 4b ; 4c ; 4d) se trouvant dans une position de transbordement par rapport au poste de prise en charge fixe (5a ; 5b ; 5c ; 5d) pour le transfert de charge, une alimentation en énergie électrique du poste de prise en charge fixe (5a ; 5b ; 5c ; 5d) étant réalisée par la remorque de train logistique (4a ; 4b ; 4c ; 4d) et la remorque de train logistique (4a ; 4b ; 4c ; 4d) étant pourvue, pour l'alimentation en énergie du poste de prise en charge fixe (5a ; 5b ; 5c ; 5d), de contacts électriques (20, 21) qui, dans la position de transbordement, peuvent entrer en contact avec des contacts homologues (30, 31) du poste de prise en charge fixe (5a ; 5b ; 5c ; 5d), la remorque de train logistique (4a ; 4b ; 4c ; 4d) possédant deux contacts électriques (20, 21) disposés espacés l'un de l'autre dans la direction longitudinale de véhicule (L), **caractérisé en ce que** les contacts électriques (20, 21) sont disposés de manière mobile dans la direction transversale de véhicule (Q) sur la remorque de train logistique (4a ; 4b ; 4c ; 4d), une unité de commande électronique (55) étant prévue, laquelle est configurée de telle sorte que la mise en contact des deux contacts (20, 21) avec les contacts homologues (30, 31) est surveillée et, en cas de non-mise en contact d'au moins un contact (20 ; 21), un positionnement incorrect de la remorque de train logistique (4a ; 4b ; 4c ; 4d) au niveau du poste de prise en charge (5a ; 5b ; 5c ; 5d) est constaté.

2. Système selon la revendication 1, **caractérisé en ce que** l'unité de commande électronique (55) est reliée à un entraînement de déplacement (60) du train logistique (2) et elle est configurée de telle sorte qu'en cas de positionnement incorrect de la remorque de train logistique (4a ; 4b ; 4c ; 4d) au niveau du poste de prise en charge (5a ; 5b ; 5c ; 5d), une instruction de commande est générée vers le dispositif d'entraînement de déplacement (60) en vue d'un repositionnement la position de transbordement.

3. Système selon la revendication 1 ou 2, **caractérisé en ce qu'**un premier contact électrique (20) est disposé dans une moitié avant de la remorque de train logistique (4a ; 4b ; 4c ; 4d) et un deuxième contact (21) est disposé dans une moitié arrière de la remorque de train logistique (4a ; 4b ; 4c ; 4d).

4. Système selon l'une des revendications 1 à 3, **caractérisé en ce que** les deux contacts (20, 21) peuvent être déplacés au moyen d'un actionneur (25) dans la direction transversale de véhicule (Q) entre une position rentrée et une position sortie, l'unité de commande électronique (55) étant configurée de telle sorte que, dans la position de transbordement, une instruction de commande est générée vers l'actionneur (25) pour faire sortir les contacts (20, 21) dans la position sortie.

5. Système selon l'une des revendications 1 à 4, **caractérisé en ce que** les contacts (20, 21) sont réalisés sous la forme de broches de contact (40) à ressort.

6. Système selon la revendication 4 ou 5, **caractérisé en ce que** l'actionneur (25) est réalisé sous la forme d'entraînement à crémaillère.

7. Système selon l'une des revendications 1 à 6, **caractérisé en ce que** le poste de prise en charge (5a ; 5b ; 5c ; 5d) est équipé d'un dispositif de communication de données (50) qui, lors de la mise en contact des deux contacts (20, 21) avec les contacts homologues (30, 31), peut être alimenté en énergie électrique par le train logistique (2) et, lorsqu'il est alimenté en énergie électrique, génère un signal de confirmation, l'unité de commande électronique (55) surveillant la mise en contact des deux contacts (20, 21) avec les contacts homologues (30, 31) à l'aide du signal de confirmation du dispositif de communication de données (50).

8. Système selon l'une des revendications 1 à 7, **caractérisé en ce que** deux contacts électriques (20, 21) sont respectivement disposés sur le côté gauche et le côté droit de la remorque de train logistique (4a ; 4b ; 4c ; 4d) dans le sens de marche (F) de la remorque de train logistique (4a ; 4b ; 4c ; 4d).

9. Système selon l'une des revendications 1 à 8, **caractérisé en ce que** le train logistique (2) fonctionne de manière autonome.

10. Système selon l'une des revendications 1 à 9, **caractérisé en ce que** le poste de prise en charge (5a ; 5b ; 5c ; 5d) possède un dispositif de convoyage (16) à commande électrique destiné au transfert de charge d'une charge (L1 ; L2 ; L3 ; L4), le dispositif de convoyage (16) pouvant être alimenté en énergie électrique par le train logistique (2) lors de la mise en contact des deux contacts (20, 21) avec les contacts homologues (30, 31).

11. Procédé pour faire fonctionner un système (1) selon l'une des revendications précédentes, **caractérisé en ce que**, dans une première étape, le train logistique (2) gagne la position de transbordement de la remorque de train logistique (4a ; 4b ; 4c ; 4d) au niveau du poste de prise en charge fixe (5a ; 5b ; 5c ; 5d), dans une deuxième étape suivante, les deux contacts (20, 21) sont déplacés dans la position sortie, dans une troisième étape suivante, l'unité de commande électronique (55) surveille si un signal de confirmation du dispositif de communication de données (50) est présent et, en l'absence du signal de confirmation, l'unité de commande électronique (55) constate un positionnement incorrect de la remorque de train logistique (4a ; 4b ; 4c ; 4d) au niveau du poste de prise en charge (5a ; 5b ; 5c ; 5d).

12. Procédé selon la revendication 11, **caractérisé en ce que**, en l'absence du signal de confirmation, l'unité de commande électronique (55) génère une instruction de commande à l'entraînement de déplacement (60) du train logistique (2) en vue d'un repositionnement de la position de transbordement.
